# EUROPÄISCHE PATENTSCHRIFT

(11) **EP 2 690 316 B1**
(45) Veröffentlichungstag und Bekanntmachung des Hinweises auf die Patenterteilung: **09.10.2019**
(21) Anmeldenummer: 13173582.1
(22) Anmeldetag: 25.06.2013
(51) Int. Cl.: F16H 41/24, F16H 45/02

(54) **Anfahrelement mit hydrodynamischen Drehmomentwandler**
Starting element with hydrodynamic torque converter
Elément de démarrage avec convertisseur de couple hydrodynamique

(30) Priorität: 25.07.2012 DE 102012213012
(43) Veröffentlichungstag der Anmeldung: 29.01.2014
(73) Patentinhaber: ZF Friedrichshafen AG, 88046 Friedrichshafen (DE)
(72) Erfinder: Mencher, Georg, 97506 Grafenrheinfeld (DE); Frey, Peter, 97447 Gerolzhofen (DE); Sudau, Jörg, 97464 Niederwerrn (DE)

(56) Entgegenhaltungen:
- EP-A2- 1 001 190
- US-A1- 2011 135 484

## Beschreibung

Ausführungsbeispiele der vorliegenden Erfindung befassen sich mit Anfahrelementen bzw. Anfahrwandlern, insbesondere mit einem einen hydrodynamischen Drehmomentwandler umfassenden Anfahrelement.

Anfahrelemente zum Übertragen eines Drehmoments von einem Antriebsaggregat zu einem nachgelagerten Antriebsstrang, beispielsweise zu einem Getriebe, sind in einer Vielzahl von Ausführungen bekannt. Zum Ermöglichen eines automatischen Anfahrens werden häufig hydrodynamische Wandler bzw. hydrodynamische Drehmomentwandler verwendet, die zur Steigerung der Energieeffizienz nach dem Anfahren im sogenannten Überbrückungsbetrieb von Wandlerüberbrückungskupplungen mechanisch überbrückt werden, um Strömungsveriuste zu verhindern und den Verbrauch von Kraftstoff bzw. Antriebsenergie zu optimieren. Kombiniert werden solche Anfahrelemente bzw. Anfahrwandler häufig mit sogenannten Torsionsschwingungsdämpfern, die einstufig oder mehrstufig ausgebildet sein können, und die ein antriebsseitiges Eingangsbauteil aufweisen, das drehfest mit einer rotierenden Antriebseinheit verbindbar ist. Zwischen diesem Eingangsbauteil und einem abtriebsseitigen Ausgangsbauteil befinden sich ein oder mehrere Energiespeicher bzw. Dämpferelemente, beispielsweise in Form von Spiralfedern, die dazu dienen können, im Überbrückungsbetrieb Schwingungen im Antriebsstrang zu unterdrücken. Das Drehmoment wird also von dem Eingangsbauteil des Torsionsschwingungsdämpfers über die energiespeichernden bzw. schwingungsdämpfenden Elemente an das Ausgangsbauteil übertragen, welches mit dem Abtrieb des Anfahrelements drehfest verbunden ist. Allgemein soll hierin als antriebsseitige Komponente eine Komponente oder eine Baugruppe verstanden werden, die in Bezug auf den Kraftfluss vom antreibenden Aggregat hin zum Ende des Antriebsstranges näher an dem antreibenden Aggregat befindlich ist als eine als abtriebsseitig bezeichnete Komponente.

Zur weiteren Erhöhung des Fahrkomforts bzw. zur weiteren Unterdrückung von Schwingungen im Antriebsstrang bei überbrücktem Wandler werden darüber hinaus auch sogenannte Schwingungstilger verbaut. Bei Schwingungstilgern bzw. Tilgern handelt es sich, allgemein gesprochen, um Zusatzmassen, die über ein Federsystem an das Antriebssystem bzw. den Torsionsschwingungsdämpfer angekoppelt werden. Die Wirkungsweise eines Schwingungstilgers beruht dabei beispielsweise darauf, dass ein schwingungsfähiges System, das aus einer Hauptmasse und einer Zusatzmasse besteht, bezüglich seiner Eigenfrequenz so abgestimmt ist, dass bei einer bestimmten Erregerfrequenz die nachfolgend auch als Tilgergewicht bezeichnete Zusatzmasse eine erzwungene Schwingung ausführt, während die Hauptmasse in Ruhe bleibt, so dass solche Schwingungsfrequenzen effizient unter-drückt werden können.

Um die Schwingungsunterdrückung über einen größeren Drehzahlbereich zu erreichen, werden drehzahladaptive Schwingungstilger bzw. Tilger verwendet, deren Eigenfrequenz bzw. Resonanzfrequenz sich drehzahlabhängig, beispielsweise proportional zur Drehzahl, ändert. Unter einem Schwingungstilger wird hierin mithin eine Einrichtung bzw. Vorrichtung oder Anordnung von Komponenten verstanden, mittels derer kein Drehmoment übertragen wird, und die in der Lage ist, bei einer bestimmten, möglicherweise veränderlichen Schwingungsfrequenz Energie aus dem Antriebsstrang zu entnehmen, um bei dieser Frequenz auftretende Drehschwingungen zu unterdrücken.

Druckschrift EP 1001190 A2 bezieht sich auf ein Anfahrelement mit einem Pumpenrad, einem Leitrad mit einem radial innerhalb des Leitrades angeordneten Freilauf und einem Turbinenrad. Dabei umfasst ein Übertragungssystem eine Kurbelwelle eines Motors und eine Antriebswelle eines mehrgängigen Getriebes, welche untereinander durch das Anfahrelement verbunden sind. Es wird dabei angestrebt, Schlupfeffekte bei einer Kraftübertragung zwischen dem Anfahrelement und dem mehrgängigen Getriebe zu reduzieren, und dadurch die Kraftübertragung effizienter zu gestalten.

Druckschrift US2011/0135484 A1 offenbart einen hydrodynamischen Drehmomentwandler mit einem Turbinenrad, einem Pumpenrad, einem Leitrad, welches über einen Leitradflansch mit einem Freilauf gekoppelt ist, einer Dämpfereinheit und einer Überbrückungskupplung. Eine große Herausforderung besteht darin, eine derartige Vielzahl von Komponenten bzw. Baugruppen in einem Anfahrelement effizient und platzsparend anzuordnen.

Ausführungsbeispiele der vorliegenden Erfindung ermöglichen dies, indem in einem Anfahrelement zum Übertragen eines Drehmoments von einem antriebsseitigen Rotationseingang des Anfahrelements auf eine Abtriebsnabe ein hydrodynamischer Drehmomentwandler verwendet wird, bei dem eine erste axiale Position eines Randes einer ein Turbinenrad entgegen einer axialen Richtung begrenzenden Turbinenschale eine vorbestimmte Lage bezüglich einer zweiten axialen Position hat, die durch das Zentrum eines Freilaufs definiert wird, mittels dessen ein Leitrad des hydrodynamischen Drehmomentwandlers in einer Richtung drehbar gelagert ist. Insbesondere ist die Differenz zwischen der ersten axialen Position und der zweiten axialen Position größer als ein vorbestimmter Minimalwert. Bei einigen Ausführungsbeispielen ist das Turbinenrad in der axialen Richtung derart versetzt, dass dessen entgegen der axialen Richtung gerichtete Begrenzung sich ungefähr an der axialen Position des Zentrums des Freilaufs für das Leitrad befindet.

Das heißt mit anderen Worten, das Turbinenrad kann in der axialen Richtung in Richtung des Freilaufs des Leitrads derart versetzt sein, dass in einer zur axialen Richtung senkrechten radialen Richtung außerhalb eines Turbinenradflansches, mittels dessen das Turbinenrad mit der Abtriebsnabe des Anfahrelements drehfest verbunden ist, zusätzlicher Bauraum entsteht, um weitere mechanische Komponenten anzuordnen. Dies kann eine kompakte, eine Vielzahl von Baugruppen enthaltende Anordnung für ein Anfahrelement ermöglichen.

Gemäß der Erfindung ist ein vorbestimmter Minimalwert für die Differenz der beiden axialen Positionen 0 mm, sodass die erste axiale Position der Begrenzung des Turbinenrads nach der zweiten axialen Position des Zentrums des Freilaufs liegt, d. h., die gesamte hydrodynamisch aktive Anordnung des hydrodynamischen Drehmomentwandlers, bestehend aus Turbinenrad, Leitrad und Pumpenrad, ist in der axialen Richtung bezüglich des Freilaufs so weit versetzt, dass diese sich vollständig hinter dem Zentrum des Freilaufs befinden, um ohne Beeinträchtigung der Funktionalität zusätzlichen axialen Bauraum für mögliche weitere Baugruppen in dem Anfahrelement zu schaffen.

Gemäß einigen weiteren Ausführungsbeispielen ist der vorbestimmte Minimalwert -5 mm, d. h., die hydrodynamisch wirksame Anordnung aus Turbinenrad, Leitrad und Pumpenrad befindet sich großteils axial versetzt hinter dem Freilauf.

Ausführungsbeispiele der Erfindung können somit unter anderem ermöglichen, in ein bestehendes Anfahrelement bzw. in einen bestehenden Wandler, beispielsweise für ein Kraftfahrzeug, zusätzliche Bauteile einzubringen, ohne die Position bereits bestehender Verzahnungen zwischen Leitrad und Leitradstützwelle oder zwischen der Abtriebsnabe für die Getriebeeingangswelle ändern zu müssen.

Gemäß einigen Ausführungsbeispielen ist, um einen axialen Versatz zu bewirken, das Leitrad mit einem sich von dem Freilauf in der radialen Richtung bis zu dem Leitrad erstreckenden Leitradflansch mit dem Freilauf verbunden, wobei der Leitradflansch einen konischen Bereich aufweist, dessen Mantelfläche mit der auf der axialen Richtung senkrechten radialen Richtung einen Winkel in dem Bereich zwischen 28° und 63°einschließt. Das heißt, der axiale Versatz wird unter anderem durch einen bezüglich der radialen Richtung geneigten Flansch einer konusförmigen Grundgeometrie ermöglicht. Je nach Gegebenheit kann bei alternativen Ausführungsbeispielen dieser Winkel auch innerhalb eines Intervalls von 35°bis 63°ode r von 45°bis 63°liegen.

Gemäß einigen Ausführungsbeispielen erstreckt sich auch ein Turbinenradflansch, mittels dessen das Turbinenrad mit der Abtriebsnabe über eine erste mechanische Verbindung drehfest verbunden ist, in einem konischen Bereich zumindest teilweise parallel zu dem konischen Bereich des Leitradflansches. Dies kann bei einigen Ausführungsbeispielen zu einer verbesserten Strömungsführung des in dem hydrodynamischen Drehmomentwandler zirkulierenden Hydrauliköls bzw. der verwendeten Hydraulikflüssigkeit führen.

Gemäß einigen Ausführungsbeispielen der Erfindung ist ferner der hydrodynamische Drehmomentwandler in der axialen Richtung gestaucht, d. h., ein Aspektverhältnis A zwischen einer axialen Ausdehnung des hydrodynamischen Drehmomentwandlers und einer radialen Ausdehnung des Turbinenrads liegt in einem Bereich zwischen 0,55 und 0,8, sodass eine näherungsweise ovale Gesamtstruktur entsteht. Die axiale Ausdehnung des hydrodynamischen Drehmomentwandlers ist dabei als diejenige Ausdehnung zu verstehen, die sich zwischen der den Drehmomentwandler entgegen der axialen Richtung begrenzenden Turbinenschale und der den hydrodynamischen Drehmomentwandler in der axialen Richtung begrenzenden Pumpenschale gibt. Das heißt, gemäß einigen Ausführungsbeispielen kann zusätzlich zu dem axialen Versatz ein hydrodynamisch aktiver Kreislauf verwendet werden, der radial weiter ausgedehnt ist als axial, um zusätzlich weiteren Bauraum in der axialen Richtung zu schaffen ohne die Gesamtfunktionalität zu beeinträchtigen. Bei alternativen Ausführungsbeispielen kann das Aspektverhältnis A auch in einem Bereich von 0,6 bis 0,8 oder in einem Bereich von 0,65 bis 0,8 liegen.

Gemäß einigen Ausführungsbeispielen der Erfindung wird der zusätzlich erhaltene axiale Bauraum genutzt, um zwischen einem Torsionsschwingungsdämpfer, der sich entgegen der axialen Richtung an den hydrodynamischen Drehmomentwandler anschließt, und dem hydrodynamischen Drehmomentwandler selbst einen Schwingungstilger anzuordnen, um die schwingungsdämpfenden Eigenschaften des Anfahrelements zu verbessern, ohne signifikant mehr Bauraum in der axialen Richtung zu benötigen. Dabei kann es gemäß einigen Ausführungsbeispielen der Erfindung insbesondere möglich sein, eine Mehrzahl von in der radialen Richtung beweglichen Tilgergewichten des Schwingungstilgers vollständig radial außerhalb des Turbinenradflansches anzuordnen, den gewonnenen Bauraum für die zusätzlichen Gewichte also vollständig auszunutzen.

Gemäß einigen Ausführungsbeispielen kann die Ausnutzung des zusätzlichen axialen Raums zusätzlich begünstigt werden, wenn eine zweite mechanische Verbindung, mittels dessen der Schwingungstilger mit dem Torsionsschwingungsdämpfer drehfest verbunden ist, radial außerhalb einer ersten mechanischen Verbindung liegt, mittels derer der Turbinenradflansch drehfest mit der Abtriebsnabe verbunden ist.

Einige Ausführungsbeispiele der Erfindung können es somit ermöglichen, gestiegenen Anforderungen der Fahrzeughersteller bezüglich Komfort und Fahrleistungen gerecht zu werden, ohne signifikante Modifikationen am Gesamtfahrwerk zu erfordern, da ein Ausführungsbeispiel eines erfindungsgemäßen Anfahrelements mit denselben Außenabmessungen als bisher hergestellt werden kann.

Bevorzugte Ausführungsbeispiele der vorliegenden Erfindung werden nachfolgend, bezugnehmend auf die beigefügten Figuren, näher erläutert. Es zeigen:
Es zeigen:
- Fig. 1: eine Schnittansicht durch eine Hälfte eines Ausführungsbeispiels eines Anfahrelements; und
- Fig.2: eine Schnittansicht durch eine Hälfte eines weiteren Ausführungsbeispiels eines Anfahrelements.

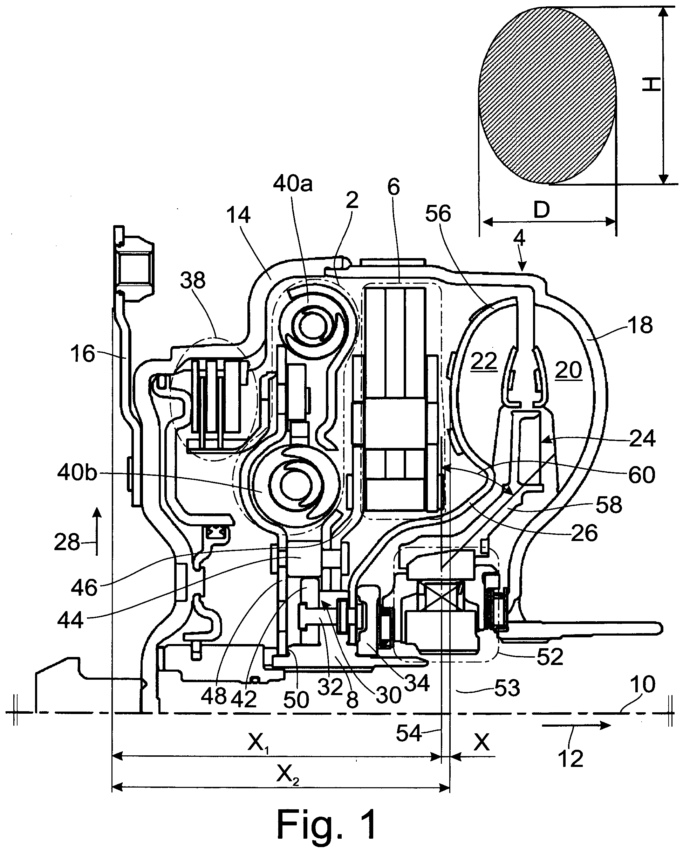

Fig. 1 zeigt ein Ausführungsbeispiel eines Anfahrelements, das einen Torsionsschwingungsdämpfer 2, einen hydrodynamischen Drehmomentwandler 4 und einen Schwingungstilger 6 umfasst. Eine Abtriebsnabe 8 weist eine Innenverzahnung auf, in die beispielsweise eine Eingangswelle eines Getriebes eingepasst werden kann, um ein von dem Anfahrelement übertragenes Drehmoment bzw. eine Rotation an eine Abtriebsseite weiterzugeben.

Während des Betriebs rotiert die Abtriebsnabe 8 um eine Rotationsachse 10, entlang derer sich in einer zur Rotationsachse 10 parallelen axialen Richtung 12 das im Wesentlichen rotationssymmetrische Anfahrelement erstreckt. Die Anbindung an einen Antrieb erfolgt über eine antriebsseitige Gehäusehälfte, den Wandlerdeckel 14, der über flexible Platten 16 mit einer hier der Einfachheit halber nicht dargestellten Antriebseinheit, beispielsweise einem Verbrennungs- oder Elektromotor, verbunden wird. Der motorseitige Wandlerdeckel 14 ist mit einem getriebeseitigen bzw. abtriebsseitigen Gehäuseteil, der Pumpenschale 18 verschweißt, die an ihrem axialen Ende als Teil des hydrodynamischen Drehmomentwandlers 4 Pumpenradschaufeln 20 aufweist, mittels derer eine hydraulisch aktive Flüssigkeit in Richtung von Turbinenschaufeln 22 des hydrodynamischen Wandlers gefördert wird, wenn das Gehäuse über die flexiblen Platten 16 in Rotation versetzt wird.

Der hydrodynamischen Drehmomentwandler weist ferner einen Leitrad 24 auf, mittels dessen der hydraulische Kreislauf zwischen den Pumpenradschaufeln 20 und den Turbinenschaufeln 22 geschlossen wird. Der Leitrad 24 ist über einen Leitradflansch 58 mit einem Freilauf 52 verbunden. Ein Freilauf 52 ist eine Anordnung von Komponenten oder Bauteilen, die eine Rotation in einer Rotationsrichtung erlaubt und in der entgegengesetzten Rotationsrichtung unterbindet.

Zum Übertragen der Rotation der Turbinenschaufeln 22 ist das Turbinenrad über einen Turbinenradflansch 26 drehfest mit der Abtriebsnabe 8 verbunden. Genauer gesagt weist die Abtriebsnabe 8 einen sich von ihr in einer zur axialen Richtung 12 senkrechten radialen Richtung 28 erstreckenden Befestigungsflansch 30 auf, der mit dem Turbinenradflansch 26 des Turbinenrads über eine erste mechanische Verbindung 32 in Form von Nieten drehfest verbunden ist.

Zur Verbesserung der Stabilität der Verbindung ist auf der dem Befestigungsflansch 30 in der axialen Richtung 12 gegenüberliegenden Seite des Turbinenradflansches 26 eine ringförmige Druckscheibe 34 angeordnet, mittels derer entgegen der axialen Richtung 12 eine Kraft auf den Turbinenradflansch 26 ausgeübt wird und die sich entgegen der radialen Richtung 28 bis zur Abtriebsnabe 8 erstreckt, um sich an der Abtriebsnabe 8 abzustützen und die Stabilität der Verbindung zwischen dem Turbinenradflansch 26 und dem Befestigungsflansch 30 der Abtriebsnabe 8 zu erhöhen. Durch ein axiales Einspannen der Turbine zwischen zwei Bauteilen, also zwischen Abtriebsnabe 8 und Druckscheibe 34, kann die Belastung der Vernietung signifikant reduziert werden, was die Betriebsfestigkeit bzw. die Zuverlässigkeit erhöht.

In dem gezeigten Ausführungsbeispiel erstreck sich die Druckscheibe 34 entgegen der radialen Richtung nach innen bis zur Abtriebsnabe 8, die die Druckscheibe radial zentriert und fixiert. Die Rückseite, das heißt das axiale Ende der Druckscheibe 34 ist bei dem in Fig. 1 gezeigten Ausführungsbeispiel als Laufbahn für ein Wälzlager ausgebildet, an dem sich die Nabe des Leitrads 24 entgegen der axialen Richtung 12 abstützt, so dass über das Wälzlager und über die Druckscheibe 34 entgegen der axialen Richtung die zum Einklemmen des Turbinenradflansches 26 verwendetet Kraft ausgeübt wird. Bei alternativen Ausführungsbeispielen kann anstelle des Axiallagers bzw. des Wälzlagers auch ein Gleitlager verwendet werden. Im Falle der Verwendung von Wälzlagern kommen selbstverständlich jedwede Lagertypen in Betracht, beispielsweise Kegelrollenlager, Zylinderrollenlager, Tonnenrollenlager, Axialnagellager, wobei die einzelnen Wälzkörper entweder aus Stahl oder auch aus einem resistenten Kunststoff ausgeführt sein können. Insbesondere kann auch im Falle eines Gleitlagers die Druckscheibe 34 aus einem Kunststoff gefertigt sein. Zur Verbesserung des Ölflusses bzw. zum Vorbeiführen des Ölflusses an einem Gleit- oder Wälzlager kann die Druckscheibe an ihrem axialen Ende beispielsweise auch Nuten oder Ausnehmungen zum Führen bzw. Kanalisieren von Öl aufweisen.

Während des Anfahrens mittels des Anfahrelements von Fig. 1 wird der Kraftschluss zur Abtriebsnabe 8 über die Pumpenradschaufeln 20, die Turbinenschaufeln 22 und den Turbinenradflansch 26 des Turbinenrads hergestellt. Nach dem Anfahren wird die in Fig. 1 dargestellte Wandlerüberbrückungskupplung 38 hydraulisch aktiviert, die einen Kraftschluss zwischen dem angetriebenen Wandlerdeckel 14 und einem Eingangsbauteil des Torsionsschwingungsdämpfers 2 herstellt, welches der Einfachheit halber in Fig. 1 nicht dargestellt ist. Wenngleich in Fig. 1 ein zweistufiger Torsionsschwingungsdämpfer 2 dargestellt ist, versteht es sich von selbst, dass bei alternativen Ausführungsformen auch ein- oder mehrstufige Torsionsschwingungsdämpfer verwendet werden können.

Bei dem zweistufigen Torsionsschwingungsdämpfer 2 der Fig. 1 wird das Drehmoment und die Rotation mittels zweier Federelemente 40a und 40b von dem Eingangsteil auf ein Ausgangsteil 42 des Drehmomentwandlers übertragen, welches mittels der ersten mechanischen Verbindung 32 mit dem Befestigungsflansch 30 der Abtriebsnabe 8 verbunden ist, um den abtriebsseitigen Kraftschluss herzustellen. Zur effizienten weiteren Bedämpfung von Rotationsschwingungen nach dem Anfahren, also bei im Eingriff befindlicher Wandlerüberbrückungskupplung 38, ist der Schwingungstilger 6 über eine zweite mechanische Verbindung 44 mit dem Torsionsschwingungsdämpfer 2 drehfest gekoppelt. Die zweite mechanische Verbindung 44 befindet sich radial weiter außen als die erste mechanische Verbindung 32, was die in Fig. 1 dargestellte äußerst kompakte Anordnung des Schwingungstilgers 6 zwischen dem Torsionsschwingungsdämpfer 2 und dem Turbinenrad ermöglicht.

Bei dem in Fig. 1 dargestellten Ausführungsbeispiel ist der Schwingungstilger 6 über ein sich von radial außen nach radial innen bis zur Abtriebsnabe 8 erstreckendes Tilgerträgerelement 46 mit dem Torsionsschwingungsdämpfer 2 vernietet. Das heißt, die erste und die zweite mechanische Verbindung 32 und 44 sind bei dem in Fig. 1 gezeigten Ausführungsbeispiel jeweils als Vernietungen ausgeführt. Bei alternativen Ausführungsbeispielen kann jede Verbindung selbstverständlich über jedwede andere Art der mechanischen Befestigung erfolgen. Am Tilgerträgerelement 46 sind ein oder mehrere Tilgergewichte befestigt, die die Funktionalität des Schwingungstilgers 6 ermöglichen.

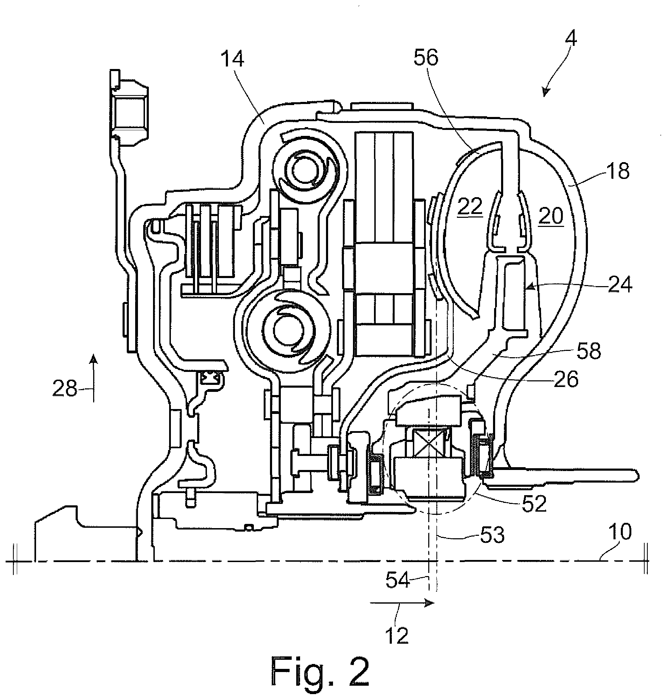

Zusätzlich ist bei den in Fig. 1 und 2 gezeigten Ausführungsbeispielen das Tilgerträgerelement 46 über seine Mittelbohrungen auf dem Außendurchmesser der Abtriebsnabe 8 gelagert, was, auch bei der Verwendung von großen Tilgergewichten, bei ungünstiger Anordnung von weiteren Lagerstellen bzw. bei Spiel in den verwendeten Lagern Unwuchten verhindern kann.

Bei der in den Fig. 1 und 2 gezeigten Ausführungsform stützt sich auch der Torsionsschwingungsdämpfer 2, der über die zweite mechanische Verbindung 44 mit dem Tilgerträgerelement 46 gekoppelt ist, über das Tilgerträgerelement 46 in der radialen Richtung 28 nach innen auf der Abtriebsnabe 8 ab, so dass ein großer Stützabstand entsteht. Dies kann das mögliche Verkippen von Tilger 6 und Torsionsschwingungsdämpfer 2 relativ zur Abtriebsnabe 8 wirkungsvoll verhindern.

Bei alternativen Ausführungsbeispielen ist es selbstverständlich ebenfalls möglich, dass sich auch der Torsionsschwingungsdämpfer 2 direkt auf der Abtriebsnabe 8 radial abstützt. Das heißt, bei einer solchen Ausführungsform würde sich eines der rotierenden Bauteile, also das Ausgangsbauteil 42, das Eingangsbauteil oder ein Zwischenblech zwischen den elastischen Elementen 40a und 40b in der radialen Richtung nach innen bis zur Oberfläche der Abtriebsnabe 8 erstrecken, um eine Abstützung zu erzielen.

Um zusätzlich eine Abstützung des Torsionsschwingungsdämpfers 2 in der axialen Richtung 12 zu erreichen, erstreckt sich ein Deckblech 48 des Torsionsschwingungsdämpfers 2 entgegen der radialen Richtung soweit nach innen, dass dieses sich mit einer Anlauffläche 50 an der Abtriebsnabe 8, welche abschnittsweise parallel zu dem Deckblech 48 verläuft, in der radialen Richtung 28 überlappt, so dass durch die Anlauffläche 50 eine Bewegung des Torsionsschwingungsdämpfers 2 in oder entgegen der axialen Richtung gehemmt oder verhindert wird. Dies kann dazu dienen, die aufgrund von eingeleiteten Axialkräften auf die Deckbleche des Torsionsschwingungsdämpfers 2 hervorgerufenen Bestrebungen, dass sich der Torsionsschwingungsdämpfer 2 in der axialen Richtung 12 verschiebt, zu verhindern. Dies wiederum kann dazu führen, dass der Torsionsschwingungsdämpfer 2 höheren Belastungen in Form von Reibung, Verformungen usw. standhalten kann und dass eine funktionale Einschränkung aufgrund von axialen Verschiebungen auf angrenzende Bauteile, wie beispielsweise die Wandlerüberbrückungskupplung 38 vermieden werden kann, so dass insgesamt die Betriebsfähigkeit für einen längeren Zeitraum störungsfrei aufrecht erhalten werden kann.

Bei dem in Fig. 1 gezeigten Ausführungsbeispiel wird die Bewegung des Torsionsschwingungsdämpfers 2 in der axialen Richtung 12 durch die Anlauffläche 50 an der Abtriebsnabe 8 gehemmt, wohingegen die Bewegung entgegen der axialen Richtung 12 über ein mit der Abtriebsnabe 8 drehfest verbundene Buchse bzw. über die Deckelnabe eingeschränkt bzw. gehemmt wird. Bei einigen Ausführungsbeispielen ist die Lagerung zwischen den Anlaufflächen 50 und dem Deckblech 48 spielbehaftet, so dass es zu keiner erhöhten Reibung kommen kann.

Bei alternativen Ausführungsbeispielen kann eine axiale Abstützung auch über das Zwischenblech des Torsionsschwingungsdämpfers 2 erfolgen, dessen Relativbewegungen bezüglich der Abtriebsnabe 8 geringer sind, so dass ein möglicher Verschleiß weiter verhindert werden kann. Die entgegen der axialen Richtung 12 bewegungshemmend wirkende Buchse kann drehfest mit der Abtriebsnabe 8 oder dem Wandlerdeckel 14 verbunden sein. Durch den axialen Kontakt zwischen Buchse und Abtriebsnabe 8 werden darüber hinaus axiale Kräfte direkt durchgeleitet, ohne negative Einflüsse auf den Torsionsschwingungsdämpfer 2 ausüben zu können.

Wenngleich in den Ausführungsbeispielen von Fig. 1 und Fig. 2 nicht gezeigt, können zusätzlich weitere Elemente in einem Anfahrelement gemäß einem Ausführungsbeispiel der Erfindung verbaut werden. Beispielsweise sind Reibeinrichtungen zur Dämpfung von Schwingungen integrierbar, die unter anderem zwischen dem linken Deckblech 48 und der Abtriebsnabe 8 angeordnet werden können. Alternative Anordnungen von solchen Reibeinrichtungen können beispielsweise zwischen dem linken Deckelblech 48 und dem Ausgangsbauteil 42 des Torsionsschwingungsdämpfers 2 angeordnet werden, bzw. auch zwischen dem Kopfstück und dem linken Deckblech 48.

Der hydrodynamische Drehmomentwandler 4 ist gemäß den Ausführungsbeispielen der Erfindung in der axialen Richtung 12 bezüglich des Zentrums des Freilaufs 52 versetzt. Als Zentrum des Freilaufs soll hierin diejenige zweite axiale Position 54 in der axialen Richtung 12 verstanden werden, die bezüglich der den Freilauf 52 bildenden Komponenten in der axialen Richtung 12 den Mittelpunkt bestimmt, beispielsweise also die Symmetrieachse eines Freilaufs oder dergleichen. Eine Differenz X bezüglich einer ersten axialen Position 53 (X1), die durch das Ende der das Turbinenrad entgegen der axialen Richtung 12 begrenzenden Turbinenschale 56 bestimmt ist, und der zweiten axialen Position 54 (X2) ist bei den in den Figuren 1 und 2 gezeigten Ausführungsbeispielen größer 0. Das heißt, der hydrodynamisch aktive Kreislauf des hydrodynamischen Drehmomentwandlers 4 befindet sich in der axialen Richtung 12 vollständig hinter dem Zentrum des Freilaufs 52.

Zur Bestimmung der Differenz der axialen Positionen 53 und 54 werden die Koordinatenwerte der axialen Positionen so bestimmt, dass die Koordinatenwerte in der axialen Richtung zunehmen. Ohne Beschränkung der Allgemeinheit ist in Fig. 1 angenommen, dass sich die axialen Positionen dabei auf einen Referenzpunkt beziehen, der durch die Position der flexiblen Platten 16 zum Einleiten des Drehmoments in das Anfahrelement gegeben ist. Bei alternativen Ausführungsbeispielen kann die axiale Position selbstverständlich auch bezüglich eines anderen Ursprungs bestimmt werden.

Der Leitrad 24 ist über einen Leitradflansch 58 mit dem Freilauf 52 verbunden, wobei der Leitradflansch 58 einen konischen Bereich aufweist, um den Versatz des Leitrad 24 bezüglich des Freilaufs 52 zu bewirken. Der konische Bereich, genauer gesagt eine Mantelfläche des den konischen Bereich bildenden Konus schließt mit der radialen Richtung 28 einen Winkel 60 ein, der je nach dem gewünschten axialen Versatz gewählt werden kann, und der bevorzugt zwischen 28°und 63°liegt.

Bei dem in Fig. 1 gezeigten Ausführungsbeispiel ist das Turbinenrad, bestehend aus der ringförmigen Turbinenschale 56 und den darin angebrachten Turbinenschaufeln 22, mittels eines einstückig mit der Turbinenschale 56 ausgebildeten Turbinenradflansches 26 drehfest mit der Abtriebsnabe 8 verbunden. Bei alternativen Ausführungsbeispielen kann der Turbinenradflansch 26 und die Turbinenschale 56 auch aus zwei separaten Bauteilen bestehen, wie beispielsweise in Fig. 2 veranschaulicht wird. Eine solche zweiteilige Ausgestaltung kann eine Produktion der dann getrennten Bauteile einfacher und mit höherer Genauigkeit ermöglichen. Darüber hinaus können bei einigen Ausführungsbeispielen die unterschiedlichen Bauteile, d. h. die Turbinenschale 56 und der Turbinenradflansch 26 aus unterschiedlichen Materialien hergestellt werden, um den unterschiedlichen Anforderungen an die einzelnen Bauteile maximal gerecht werden zu können, sodass beispielsweise Gesamtgewicht gespart werden kann. Insbesondere können beide Bauteile unabhängig voneinander, beispielsweise im Hinblick auf deren Materialstärke, belastungsgerecht dimensioniert werden.

Die Verbindung zwischen Turbinenradflansch 26 und Turbinenschale 56 kann dabei auf jedwede Art und Weise kraft-, form- oder stoffschlüssig hergestellt sein. Beispielsweise kann die Verbindung auch durch einen Durchgriff der Turbinenschaufeln 22 durch die Turbinenschale 56 hergestellt sein, wobei die durchgreifenden Teile der Turbinenschaufeln 22 umgelegt oder verrollt werden, um eine drehfeste Verbindung zwischen der Turbinenschale 56 und dem Turbinenradflansch 26 herzustellen. Allgemein kann eine erste oder zweite mechanische Verbindung im oben beschriebenen Sinne jedwede form-, kraft- oder stoffschlüssige Verbindung sein. Formschlüssig bedeutet in diesem Zusammenhang, dass eine Verbindung, die eine Relativbewegung der miteinander verbundenen Komponenten in zumindest einer Verbindungsrichtung verhindert, dadurch bewirkt wird, dass die Geometrie der zur Verbindung verwendeten Komponenten derart gewählt wird, dass diese sich in einer Richtung senkrecht zur Verbindungsrichtung überschneiden, um derart die Bewegung in der Verbindungsrichtung zu verhindern. Kraftschlüssig bedeutet in diesem Zusammenhang, dass eine Verbindung, die eine Relativbewegung der miteinander verbundenen Komponenten in zumindest einer Richtung verhindert, durch eine zwischen den Komponenten senkrecht zur Verbindungsrichtung wirkende Kraft, die beispielsweise zu erhöhten Kohäsions- oder Adhäsionskräften führt, bewirkt wird. Ein Kraftschluss liegt somit so lange vor, wie eine durch die Haftreibung bewirkt Kraft zwischen den Komponenten nicht überschritten wird. Stoffschlüssig bedeutet in diesem Zusammenhang, dass eine Verbindung, die eine Relativbewegung der miteinander verbundenen Komponenten in zumindest einer Richtung verhindert, über atomare oder molekulare Kräfte vermittelt wird. Dabei kann zumindest teilweise eine Vermischung der Materialen der verbundenen Komponenten an einer Grenzfläche erfolgen. Diese muss nicht ausschließlich zwischen den Materialen der verbundenen Komponenten allein erfolgen. Vielmehr kann zusätzlich eine die Vermischung bewirkende oder unterstützende Materialkomponente, beispielsweise in Form eines Klebstoffes oder eines Materials eines Schweißdrahtes vorhanden sein, sodass an der Grenzfläche eine Mehrzahl von Materialen im mikroskopischen Maßstab miteinander vermischt sind.

Bei dem in Fig. 1 gezeigten Ausführungsbeispiel weist der hydrodynamische Drehmomentwandler 4 ferner ein Aspektverhältnis A=D/H auf, das kleiner als 1 ist. Das heißt, eine Breite D ist geringer als eine Höhe H des hydrodynamischen Drehmomentwandlers, was zusätzlich dazu beiträgt, bei gleicher Leistungsfähigkeit des hydrodynamischen Drehmomentwandlers 4 in der axialen Richtung 12 Bauraum zu sparen.

Das Aspektverhältnis A beschreibt also das Verhältnis zwischen der axialen Ausdehnung des hydrodynamischen Drehmomentwandlers 4 und der radialen Ausdehnung desselben. Die radiale Ausdehnung wird beispielsweise durch die radiale Ausdehnung der Turbinenschale 56 bestimmt, wohingegen die axiale Ausdehnung der maximalen axialen Ausdehnung des hydrodynamischen Drehmomentwandlers 4 zwischen der Turbinenschale 56 und der das Pumpenrad in der axialen Richtung begrenzenden Pumpenschale 18 entspricht.

Bei dem in Fig. 1 gezeigten Wandler für den Einbau in ein Kraftfahrzeug wird also zusätzlicher Platz in dem Anfahrelement durch eine axiale Verschiebung des Torus bzw. des hydrodynamischen Drehmomentwandlers 4 in Richtung des Getriebes erreicht. Die Verschiebung kann dabei so groß sein, dass sich die axiale Begrenzung des Strömungsraums durch die Turbinenschale 56 hinter der Mitte des Freilaufs 52 des Leitrades 24 befindet.

Wie in den Fig. 1 und 2 dargestellt, weisen die dort gezeigten Ausführungsbeispiele einen großen axialen Versatz zwischen Freilauf 52 und Leitradschaufeln des Leitrads 24 auf. Der den Freilauf 52 und die Leitradschaufeln verbindende Leitradflansch 58 weist eine konusförmige Form auf, die zumindest teilweise parallel zu den Flanschbereichen der Pumpenschale 18 bzw. zu dem Turbinenradflansch 26 verläuft, was bei einigen Ausführungsbeispielen zu einer verbesserten Ölführung im Ölkreislauf führen kann. Ferner kann dies zu einem verbesserten Freigang zwischen den Bauteilen, zu einer besseren Bauteilsteifigkeit bzw. zu einem verringerten Materialeinsatz führen.

Wenngleich bei dem in den Fig. 1 und 2 gezeigten Ausführungsbeispielen eine Konfiguration dargestellt ist, die einen zweistufigen Torsionsschwingungsdämpfer 2, sowie einen drehzahladaptiven Schwingungstilger (DAT) umfasst, sind selbstverständlich beliebige andere Kombinationen denkbar, um durch Ausnutzung des zusätzlich zur Verfügung stehenden axialen Bauraums eine effiziente Schwingungsdämpfung im Antriebsstrang sicherzustellen. Beispielsweise kann auch eine Kombination aus einem zweistufigen Torsionsschwingungsdämpfer mit einem Festfrequenztilger (DFT) verwendet werden oder ein erweiterter zweistufiger Torsionsschwingungsdämpfer mit zusätzlichen Federsätzen (DLT). Selbstverständlich können beliebige andere Vorrichtungen in dem axial frei gewordenen Raum angebracht werden, um die Eigenschaften des Anfahrelements zu verbessern.

Ermöglicht auch durch die radiale Staffelung der ersten und zweiten mechanischen Verbindungen 32 und 44 ist der Turbinenradflansch 26 so geformt, dass sich dieser in der axialen Richtung 12 vollständig innerhalb des Schwingungstilgers 6 erstreckt, bis dieser an den Turbinenschaufeln 22 endet.

Ausführungsbeispiele der vorliegenden Erfindung können selbstverständlich nicht nur in Pkws, sondern auch in Lkws oder stationären Maschinen verwendet werden, bei denen das Verwenden einer Anfahrelements notwendig oder sinnvoll ist und die darüber hinaus von der Dämpfung von Drehschwingungen im Betrieb profitieren.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen von Bedeutung sein.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

### Bezugszeichen

- 2: Torsionsschwingungsdämpfer
- 4: hydrodynamischer Drehmomentwandler
- 6: Schwingungstilger
- 8: Abtriebsnabe
- 10: Rotationsachse
- 12: axiale Richtung
- 14: Wandlerdeckel
- 16: flexible Platte
- 18: Pumpenschale
- 20: Pumpenradschaufeln
- 22: Turbinenschaufeln
- 24: Leitrad
- 26: Turbinenradflansch
- 28: radiale Richtung
- 30: Befestigungsflansch
- 32: erste mechanische Verbindung
- 34: Druckscheibe
- 38: Wandlerüberbrückungskupplung
- 40a, b: elastische Elemente
- 42: Ausgangsbauteil
- 44: zweite mechanische Verbindung
- 46: Tilgerträgerelement
- 48: Deckblech
- 50: Anlauffläche
- 52: Freilauf
- 53: erste axiale Position
- 54: zweite axiale Position
- 56: Turbinenschale
- 58: Leitradflansch
- 60: Winkel

## Patentansprüche

1. Anfahrelement zum Übertragen eines Drehmoments von einem antriebsseitigen Rotationseingang (14) des Anfahrelements auf eine Abtriebsnabe (8), umfassend:
einen hydrodynamischen Drehmomentwandler (4) mit
einem Wandlerdeckel (14), der über einer flexiblen Platten (16) mit einer Antriebseinheit verbunden wird, einem drehfest mit der Abtriebsnabe (8) gekoppelten Turbinenrad, umfassend eine Turbinenschale (56) mit darin angeordneten Turbinenschaufeln (22), wobei eine maximale Erstreckung der Turbinenschale (56) entgegen einer von der flexiblen Platte (16) in Richtung der Turbinenschale (56) verlaufenden axialen Richtung (12) an einer ersten axialen Position (53) endet;
einem dem Turbinenrad in der axialen Richtung (12) gegenüberliegendem Pumpenrad (20); und
einem zwischen dem Turbinenrad und dem Pumpenrad (22) angeordneten Leitrad (24), welches über einen Leitradflansch (58) mit einem sich in einer axialen Richtung (12) an die Abtriebsnabe (8) anschließenden Freilauf (52) gekoppelt ist, wobei ein durch einen Mittelpunkt einer axialen Ausdehnung des Freilaufs (52) festgelegtes Zentrum des Freilaufs (52) sich an einer zweiten axialen Position (54) befindet; **dadurch gekennzeichnet, dass**
eine Differenz zwischen der ersten axialen Position (53) und der zweiten axialen Position (54) größer ist als 0 mm, sodass die erste axiale Position (53) in der axialen Richtung (12) bezüglich der flexiblen Platte (16) als Referenzpunkt hinter der zweiten axialen Position (54) liegt.

2. Anfahrelement nach einem der vorhergehenden Ansprüche, bei dem das Turbinenrad über einen sich von der Abtriebsnabe (8) in einer zur axialen Richtung (12) senkrechten radialen Richtung (28) bis zum Turbinenrad erstreckenden Turbinenradflansch (26) mit der Abtriebsnabe (8) drehfest verbunden ist, wobei der Turbinenradflansch (26) mit der Abtriebsnabe (8) mittels einer ersten mechanischen Verbindung (32) verbunden ist.

3. Anfahrelement nach einem der vorhergehenden Ansprüche, bei dem der Leitradflansch (58) einen konischen Bereich aufweist, wobei ein Winkel (60) zwischen einer Mantelfläche des konischen Bereichs und der radialen Richtung in einem Bereich zwischen 28°bis 63°, zwischen 35°bis 63°oder zwisch en 45°bis 63°liegt.

4. Anfahrelement nach Anspruch 2 oder 3, bei dem der Turbinenradflansch (26) einen konischen Bereich aufweist, der zumindest abschnittsweise parallel zu dem konischen Bereich des Leitradflansches (58) verläuft.

5. Anfahrelement nach einem der vorhergehenden Ansprüche, bei dem ein Aspektverhältnis A=D/H zwischen einer axialen Ausdehnung D, die der hydrodynamische Drehmomentwandler (4) zwischen der Turbinenschale (56) und einer das Pumpenrad in der axialen Richtung (12) begrenzenden Pumpenschale (18) aufweist, und einer radialen Ausdehnung H der Turbinenschale (56) in einem Bereich zwischen 0,55 und 0,8 liegt.

6. Anfahrelement nach einem der vorhergehenden Ansprüche, das ferner einen sich entgegen der axialen Richtung (12) an den hydrodynamischen Drehmomentwandler (4) anschließenden Torsionsschwingungsdämpfer (2) aufweist, der mit dem Rotationseingang über ein Eingangsbauteil des Torsionsschwingungsdämpfers (2) drehfest koppelbar ist und der ein Ausgangsbauteil (42) umfasst, das über eine erste mechanische Verbindung (32) drehfest mit der Abtriebsnabe (8) gekoppelt ist.

7. Anfahrelement nach Anspruch 6, das ferner einen in der axialen Richtung (12) zwischen dem Torsionsschwingungsdämpfer (2) und dem Turbinenrad angeordneten Schwingungstilger (6) aufweist.

8. Anfahrelement nach Anspruch 7, bei dem der Schwingungstilger (6) eine Mehrzahl von in der radialen Richtung (28) beweglichen Tilgergewichten aufweist, die sämtlich in der radialen Richtung außerhalb des Turbinenradflansches (26) angeordnet sind.

9. Anfahrelement nach einem der Ansprüche 7 oder 8, bei der der Schwingungstilger (6) über eine zweite mechanische Verbindung (44) mit dem Torsionsschwingungsdämpfer (2) drehfest verbunden ist, wobei sich die erste mechanische Verbindung (32) in der radialen Richtung (28) weiter innen befindet als die zweite mechanische Verbindung (44).

## Claims

1. Starting element for the transmission of a torque from a drive-side rotational input (14) of the starting element to an output hub (8), comprising: a hydrodynamic torque converter (4) with a converter cover (14) which is connected via a flexible plate (16) to a drive unit, a turbine wheel which is coupled to the output hub (8) fixedly so as to rotate with it, comprising a turbine shell (56) with turbine blades (22) which are arranged therein, a maximum extent of the turbine shell (56) counter to an axial direction (12) which runs from the flexible plate (16) in the direction of the turbine shell (56) ending at a first axial position (53); a pump impeller (20) which lies opposite the turbine wheel in the axial direction (12); and a stator (24) which is arranged between the turbine wheel and the pump impeller (22) and is coupled via a stator flange (58) to a freewheel (52) which adjoins the output hub (8) in an axial direction (12), a centre of the freewheel (52), which centre is fixed by way of a centre point of an axial extent of the freewheel (52), being situated at a second axial position (54); **characterized in that** a difference between the first axial position (53) and the second axial position (54) is greater than 0 mm, with the result that the first axial position (53) lies in the axial direction (12) with regard to the flexible plate (16) as a reference point behind the second axial position (54).

2. Starting element according to one of the preceding claims, in the case of which starting element the turbine wheel is connected fixedly to the output hub (8) so as to rotate with it via a turbine wheel flange (26) which extends from the output hub (8) as far as the turbine wheel in a radial direction (28) which is perpendicular with respect to the axial direction (12), the turbine wheel flange (26) being connected to the output hub (8) by means of a first mechanical connection (32).

3. Starting element according to either of the preceding claims, in the case of which starting element the stator flange (58) has a conical region, an angle (60) between an envelope surface of the conical region and the radial direction lying in a range between 28° and 63°, between 35° and 63° or between 45° and 63°.

4. Starting element according to Claim 2 or 3, in the case of which starting element the turbine wheel flange (26) has a conical region which runs at least in sections parallel to the conical region of the stator flange (58).

5. Starting element according to one of the preceding claims, in the case of which starting element an aspect ratio A = D/H between an axial extent D, which the hydrodynamic torque converter (4) has between the turbine shell (56) and a pump shell (18) which delimits the pump impeller in the axial direction (12), and a radial extent H of the turbine shell (56) lies in a range between 0.55 and 0.8.

6. Starting element according to one of the preceding claims which, furthermore, has a torsional vibration damper (2) which adjoins the hydrodynamic torque converter (4) counter to the axial direction (12), can be coupled fixedly via an input component of the torsional vibration damper (2) to the rotational input so as to rotate with it, and comprises an output component (42) which is coupled fixedly via a first mechanical connection (32) to the output hub (8) so as to rotate with it.

7. Starting element according to Claim 6 which, furthermore, has a vibration absorber (6) which is arranged in the axial direction (12) between the torsional vibration damper (2) and the turbine wheel.

8. Starting element according to Claim 7, in the case of which starting element the vibration damper (6) has a plurality of absorber weights which can be moved in the radial direction (28) and are all arranged outside the turbine wheel flange (26) in the radial direction.

9. Starting element according to either of Claims 7 and 8, in the case of which the vibration absorber (6) is connected fixedly via a second mechanical connection (44) to the torsional vibration damper (2) so as to rotate with it, the first mechanical connection (32) being situated further to the inside in the radial direction (28) than the second mechanical connection (44).

## Revendications

1. Élément de démarrage destiné à transmettre un couple d'une entrée de rotation (14) côté entraînement de l'élément de démarrage à un moyeu de prise de force (8), comprenant :
un convertisseur de couple hydrodynamique (4) pourvu d'un couvercle de convertisseur (14), qui est relié à une unité d'entraînement par le biais d'une plaque flexible (16),
d'une roue de turbine couplée en rotation solidaire au moyeu de prise de force (8), comportant une coque de turbine (56) dans laquelle sont disposées des pales de turbine (22), une projection maximale de la coque de turbine (56) en sens inverse d'une direction axiale (12) s'étendant depuis la plaque flexible (16) en direction de la coque de turbine (56) se terminant au niveau d'une première position axiale (53) ;
d'une roue de pompe (20) à l'opposé de la roue de turbine dans la direction axiale (12) ; et
d'une aube directrice (24) disposée entre la roue de turbine et la roue de pompe (22), laquelle est accouplée par le biais d'une bride d'aube directrice (58) à une roue libre (52) qui se raccorde au moyeu de prise de force (8) dans une direction axiale (12), un centre de la roue libre (52), fixé par un point central d'une expansion axiale de la roue libre (52), se trouvant au niveau d'une deuxième position axiale (54) ;
**caractérisé en ce que**
une différence entre la première position axiale (53) et la deuxième position axiale (54) est supérieure à 0 mm, de sorte que la première position axiale (53), dans la direction axiale (12), se trouve derrière la deuxième position axiale (54) par rapport à la plaque flexible (16) en tant que point de référence.

2. Élément de démarrage selon l'une des revendications précédentes, avec lequel la roue de turbine est reliée en rotation solidaire au moyeu de prise de force (8) par le biais d'une bride de roue de turbine (26) qui s'étend depuis le moyeu de prise de force (8) jusqu'à la roue de turbine dans une direction radiale (28) perpendiculaire à la direction axiale (12), la bride de roue de turbine (26) étant reliée au moyeu de prise de force (8) au moyen d'une première liaison mécanique (32).

3. Élément de démarrage selon l'une des revendications précédentes, avec lequel la bride d'aube directrice (58) possède une zone conique, un angle (60) entre une enveloppe de la zone conique et la direction radiale étant compris dans une plage entre 28° et 63°, entre 35° et 63° ou entre 45° et 63°.

4. Élément de démarrage selon la revendication 2 ou 3, avec lequel la bride de roue de turbine (26) possède une zone conique qui s'étend au moins dans certaines portions parallèlement à la zone conique de la bride d'aube directrice (58).

5. Élément de démarrage selon l'une des revendications précédentes, avec lequel un rapport d'aspect A = D/H entre une expansion axiale D, que présente le convertisseur de couple hydrodynamique (4) entre la coque de turbine (56) et une coque de pompe (18) qui délimite la roue de pompe dans la direction axiale (12), et une expansion radiale H de la coque de turbine (56) est compris dans une plage entre 0,55 et 0,8.

6. Élément de démarrage selon l'une des revendications précédentes, lequel possède en outre un amortisseur d'oscillations de torsion (2) qui se raccorde au convertisseur de couple hydrodynamique (4) à l'opposé de la direction axiale (12) et qui peut être accouplé en rotation solidaire à l'entrée de rotation par le biais d'un élément structural d'entrée de l'amortisseur d'oscillations de torsion (2) et comporte un élément structural de sortie (42), qui est couplé en rotation solidaire au moyeu de prise de force (8) par le biais d'une première liaison mécanique (32).

7. Élément de démarrage selon la revendication 6, lequel possède en outre un amortisseur d'oscillations (6) disposé dans la direction axiale (12) entre l'amortisseur d'oscillations de torsion (2) et la roue de turbine.

8. Élément de démarrage selon la revendication 7, avec lequel l'amortisseur d'oscillations (6) possède une pluralité de poids amortisseurs mobiles dans la direction radiale (28), qui sont tous disposés à l'extérieur de la bride de roue de turbine (26) dans la direction radiale.

9. Élément de démarrage selon l'une des revendications 7 ou 8, avec lequel l'amortisseur d'oscillations (6) est relié en rotation solidaire à l'amortisseur d'oscillations de torsion (2) par le biais d'une deuxième liaison mécanique (44), la première liaison mécanique (32) se trouvant plus loin à l'intérieur dans la direction radiale (28) que la deuxième liaison mécanique (44).
